# EUROPÄISCHE PATENTSCHRIFT

(11) **EP 3 486 736 B1**
(45) Veröffentlichungstag und Bekanntmachung des Hinweises auf die Patenterteilung: **11.12.2019**
(21) Anmeldenummer: 18191674.3
(22) Anmeldetag: 30.08.2018
(51) Int. Cl.: G05B 15/02, G01S 5/02

(54) **VERFAHREN ZUM PERSONENPOSITIONSABHÄNGIGEN ANSTEUERN WENIGSTENS EINES IN EIN GEBÄUDEAUTOMATISIERUNGSSYSTEM EINGEBUNDENEN AKTORS**
METHOD FOR CONTROLLING AT LEAST ONE ACTUATOR INTEGRATED INTO A BUILDING AUTOMATION SYSTEM BASED ON THE POSITION OF A PERSON
PROCÉDÉ DE COMMANDE D'AU MOINS UN ACTIONNEUR INTÉGRÉ DANS UN SYSTÈME D'AUTOMATISATION DE BÂTIMENT DÉPENDANTE DE LA POSITION DE LA PERSONNE

(30) Priorität: 16.11.2017 DE 102017126956
(43) Veröffentlichungstag der Anmeldung: 22.05.2019
(73) Patentinhaber: Insta GmbH, 58509 Lüdenscheid (DE)
(72) Erfinder: Groll, Roland, 58507 Lüdenscheid (DE)

(56) Entgegenhaltungen:
- US-A1- 2013 342 391
- US-A1- 2014 107 846
- US-A1- 2014 244 003

## Beschreibung

Die Erfindung betrifft ein Verfahren zum personenpositionsabhängigen Ansteuern wenigstens eines in einem Gebäudeautomatisierungssystem eingebundenen Aktors.

Gebäudeautomatisierungssysteme dienen zur Überwachung, Steuerung, Auswertung und Regelung von in einem Gebäude installierten Sensoren und Aktoren. Kern eines solchen Gebäudeautomatisierungssystems ist ein Installationsbus, an den die in das Gebäudeautomatisierungssystem eingebundenen Sensoren und Aktoren angeschlossen sind. Insofern sind sämtliche Elemente bzw. Einheiten eines solchen Systems gewerkeübergreifend miteinander vernetzt. Im Rahmen des Betriebs eines solchen Gebäudeautomatisierungssystems kann beispielsweise eine Beleuchtungssteuerung in Abhängigkeit von der gewünschten Helligkeit in einem Raum automatisiert erfolgen. Zu diesem Zweck werden die Sensordaten eines oder mehrerer Helligkeitssensoren ausgewertet, um dann in Abhängigkeit einer zuvor für diesen Raum eingerichteten helligkeitsabhängigen Schaltschwelle die Beleuchtung einzuschalten oder auszuschalten. Im Rahmen eines solchen Gebäudeautomatisierungssystems werden Aktoren mitunter auch personenpositionsabhängig angesteuert, ohne dass personenseitig hierzu aktiv ein Sensor, etwa ein Schalter betätigt werden muss. Hierzu werden Bewegungsmelder eingesetzt. Wird von einem Bewegungsmelder eine Bewegung in dem zu dem Bewegungsmelder eingerichteten Überwachungsbereich sensiert, wird der diesem Bewegungsmelder zugeordnete Aktor, etwa die Raumbeleuchtung eingeschaltet. Ist die zu dem Bewegungsmelder eingerichtete Nachlaufzeit abgelaufen, schaltet die Raumbeleuchtung wieder aus.

Mitunter soll eine fortlaufende Positionsbestimmung von Personen in einem Gebäude vorgenommen werden. Hierzu reicht es nicht aus, dass eine Person zufällig an einem im Gebäude installierten Bewegungsmelder vorbeikommt. Eingesetzt werden hierfür Ortungsverfahren, mit denen eine kontinuierliche Positionsbestimmung durchgeführt werden kann. Genutzt werden kann hierfür das in vielen Gebäudeautomatisierungssystemen vorhandene WLAN oder ein anderes funkbasiertes Kommunikationssystem. Hierzu muss die Person ein entsprechendes Sende-Empfangsgerät, beispielsweise ein Smartphone mitführen, welches in das WLAN eingebunden ist. Eine Auswertung kann über die Antwortsignalstärke der von der Person mitgeführten Sende-Empfangseinrichtung zu einer Basisstation erfolgen. Möglich ist auch die Auswertung des durch ein WLAN bereitgestellten Funkfeldes, und zwar anhand der Störungen, die in ein solches Feld von einer ein solches Feld durchschreitenden Person induziert werden. In Abhängigkeit von der ermittelten Position der Person können sodann vorausschauend Aktoren angesteuert werden, beispielsweise eine Beleuchtung, etwa im Rahmen einer fortschreitenden Beleuchtung entlang eines Flures. Auf Basis der Daten einer solchen Positionsbestimmung lässt sich ein Ansteuern von Aktoren (Ein- und Ausschalten) exakter in Anpassung an die tatsächlichen nutzerseitigen Bedürfnisse steuern.

Aus US 2014/0244003 A1 ist ein Verfahren zur Durchführung einer industriellen Automatisierungssteuerung bekannt, welche auf einer personenbezogenen Positionsbestimmung mittels Sensoren basiert. Dabei wird ein Vertrauenswert für die detektierte Position in Abhängigkeit von der Positionserfassungsgenauigkeit ermittelt und die Aktoransteuerung erst durchgeführt, wenn der ermittelte Vertrauenswert größer als ein bestimmter Schwellenwert ist. Dieses Dokument offenbart jedoch weder die Verwendung unterschiedlicher Ortungsverfahren noch eine Anpassung der Gewichtungsfaktoren in Folge der personenseitigen Korrekturansteuerung eines anderen als durch das Verfahren bestimmten Aktors.

US 2013/0342391 A1 offenbart ein Hybrid-Positionsbestimmungssystem, bei dem eine genauere Positionsbestimmung erreicht wird, indem die durch die unterschiedlichen Ortungsverfahren bestimmten Positionen entsprechend ihres jeweiligen Gewichts zur Bildung eines gewichteten Mittelwertes beitragen. Allerdings wird auch in diesem Dokument nicht offenbart, eine Anpassung der Gewichtungsfaktoren der Ortungsverfahren vorzunehmen, wenn der Nutzer einen anderen Aktor als den durch das System ermittelten betätigt.

Auch wenn eine personenpositionsabhängige Ansteuerung auf Basis der Ergebnisse eines Ortungsverfahrens Vorteile mit sich bringt, sind diese Verfahren mitunter anfällig gegenüber Störeinflüssen. Überdies wäre es wünschenswert, wenn im Zusammenhang mit der Ansteuerung von Aktoren eines Gebäudeautomatisierungssystems eine Personenortung und -nachverfolgung auch vorgenommen werden könnte, ohne dass die Person notwendigerweise eine als Identifikationsgeber erforderliche Sende-Empfangseinrichtung mitführt. Ferner wäre es wünschenswert, wenn ein personenpositionsabhängiges Ansteuern eines oder mehrerer Aktoren in Bezug auf die Wahrscheinlichkeit, dass aufgrund der ermittelten Position der aus personenbezogener Sicht richtige Aktor angesteuert wird, verbessert ist.

Gelöst wird diese Aufgabe durch ein Verfahren der eingangs genannten Art, bei welchem Verfahren für die personenbezogene Positionsbestimmung die Ergebnisse von zumindest zwei unterschiedlichen Ortungsverfahren verwendet werden und welches Verfahren mit folgenden Schritten durchgeführt wird:
- Gewichten der Ortungsergebnisse jedes Ortungsverfahrens in Abhängigkeit von seiner personenbezogenen Trefferwahrscheinlichkeit und Positionserfassungsgenauigkeit,
- Ermitteln der aktuellen Position der Person auf Grundlage der gewichteten Ergebnisse der Ortungsverfahren,
- Vergleichen der ermittelten Position mit in einer Datenbank hinterlegten, als Aktor auslösend definierten Positionen,
- bei hinreichender Übereinstimmung der ermittelten Position mit einer als Aktor auslösend definierten Position Ansteuern des wenigstens einen der Position zugeordneten Aktors mit den für diese Position vorgesehenen Steuerdaten über das Gebäudeautomatisierungssystem und
- Durchführen einer Situationsbewertung bezüglich der Trefferwahrscheinlichkeit und der Erfassungsgenauigkeit der ermittelten Position der Person, wobei in die Situationsbewertung die aktuellen Ergebnisse der Ortungsverfahren, in einer Datenbank hinterlegte, der ermittelten Position entsprechende Referenzdatensätze dieser Ortungsverfahren und eine, wenn vorliegend, personenseitig als Reaktion auf die Aktoransteuerung vorgenommene Korrekturansteuerung vorgenommene Aktion einfließen und wobei bei negativer Situationsbewertung eine Adaption des Gewichtungsfaktors zumindest eines der Ortungsverfahren zum Korrigieren der ermittelten Position vorgenommen wird,
wobei eine negative Situationsbewertung systembedingt oder durch eine Korrekturansteuerung hervorgerufen wird und wobei eine personenseitige Korrekturansteuerung eines anderen Aktors, als durch das Gebäudeautomatisierungssystem angesteuert, zu einer negativen Situationsbewertung führt und dann der oder die Gewichtungsfaktoren der Ortungsverfahren, deren Ergebnisse für die Positionsbestimmung verwendet worden sind, adaptiert werden, um auf diese Weise die ermittelte Position der Person an diejenige anzupassen, die der vordefinierten aktorauslösenden Position entspricht, die dem von der Person im Zuge der Korrekturansteuerung betätigten Aktor entspricht.

Bei diesem Verfahren gehen in die Personenortung und damit in die personenbezogene Positionsbestimmung die Ergebnisse von zumindest zwei unterschiedlichen Ortungsverfahren ein. Die Verwendung der Ergebnisse von einer Mehrzahl von Ortungsverfahren vermag nicht nur die Verlässlichkeit in der Erfassung einer Person (Trefferwahrscheinlichkeit) und die Genauigkeit in der Positionsbestimmung zu verbessern. Vielmehr besteht bei diesem Verfahren auch die Möglichkeit, zu hinreichend genauen Ergebnissen zu gelangen, wenn eine Mehrzahl von Ortungsverfahren eingesetzt werden, von denen jedes hinsichtlich seiner Trefferwahrscheinlichkeit und Positionsbestimmungsgenauigkeit weniger genau ist ein Verfahren, bei dem die nachzuverfolgende Person hinsichtlich ihrer aktuellen Positionsbestimmung eine Sender-Empfangseinrichtung mitführen muss. Die bei den anderen Ortungsverfahren geringere Trefferwahrscheinlichkeit und Positionsbestimmungsgenauigkeit wird durch die Verwendung der Ergebnisse von mehreren derartiger Ortungsverfahren kompensiert, sodass das daraus abgeleitete Ergebnis den Anforderungen an Trefferwahrscheinlichkeit und Positionsbestimmungsgenauigkeit genügt.

Wenn im Rahmen dieser Ausführungen von Ortungsverfahren die Rede ist, bei denen eine Person keine Sende-Empfangseinrichtung, wie etwa ein Smartphone oder dergleichen mitführen muss, kann es sich insbesondere um Verfahren handeln, die sich mit den in einem bereits vorhandenen Gebäudeautomatisierungssystem integrierten Komponenten durchführen lassen. Teil eines solchen Gebäudeautomatisierungssystems ist in aller Regel eine drahtlose Kommunikation, entweder ausschließlich oder ergänzend zu einer leitungsgebundenen Kommunikation. Bei einer drahtlosen Kommunikation unter Verwendung von elektromagnetischen Wellen, typischerweise Funkwellen, können Störungen, die durch eine Person in dem elektrischen Funkfeld erzeugt werden, Rückschlüsse auf das Vorhandensein einer Person in dem Feld und auf die Position der Person in dem Funkfeld gezogen werden. Gleiches gilt für Schallwellen. In einem Gebäudeautomatisierungssystem sind für andere Zwecke ohnehin zahlreiche Sensoren eingebunden, wie etwa Schalter, Displays oder Aktoransteuerungen, wie beispielsweise Heizungsventile oder dergleichen, sowie Bewegungsmelder oder Zutrittskontrolleinrichtungen. In aller Regel verfügt ein solches Gebäudeautomatisierungssystem ebenfalls über Temperatur- und Raumfeuchtesensoren, oftmals auch über Gassensoren, wie beispielsweise CO₂-Sensoren. Auch wenn diese Sensoren ursächlich im Gebäudeautomatisierungssystem anderen Zwecken zugeordnet sind, können die von diesen Sensoren bereitgestellten Sensordaten im Zusammenhang mit einer Personenortung und -nachverfolgung genutzt werden. Wird von einer Person beispielsweise eine Hardwarekomponente, wie beispielsweise ein Schalter, ein Display oder ein Heizungsventil betätigt, kann das erzeugte Sensorsignal auch im Rahmen einer Personenortung genutzt werden. Schließlich ist systemseitig der Ort eines solchen nutzerseitig manuell betätigten Sensors bekannt. Gleiches gilt für andere Sensoren, wie etwa berührungslos arbeitende Sensoren, wie Bewegungsmelder und Zutrittskontrolleinrichtungen. Wird von einem Bewegungsmelder eine personenbezogene Bewegung sensiert, kann hieraus im Rahmen der Personenortung abgeleitet werden, dass sich eine Person innerhalb des Überwachungsbereiches des Bewegungsmelders befindet. Das Signal, welches als Personenbewegungssignal erkannt worden ist, kann zudem im Rahmen der Personenortung hinsichtlich des Abstandes der Person von dem Bewegungsmelder ausgewertet werden, und zwar in Abhängigkeit von dem von dem Bewegungsmelder genutzten Verfahren anhand der Signalstärke oder der Signallaufzeit. Diese zusätzliche Auswertung erlaubt eine präzise Einengung desjenigen Bereiches innerhalb des Überwachungsbereiches eines solchen Bewegungsmelders, in dem sich die detektierte Person befinden kann. Damit wird allein auf diesem Wege die Positionserfassungsgenauigkeit deutlich verbessert.

Auch Sensoren, die klimatische Raumdaten erfassen, wie etwa die Temperatur, den Feuchtigkeitsgehalt oder ein Gasbestandteil, typischerweise den CO₂-Gehalt, können zur Personenortung verwendet werden. Eine in einem Raum vorhandene Person strahlt Wärme ab, die wiederum von einem Temperatursensor erfasst werden kann. Zudem erhöht sich der CO₂-Gehalt. Auch die Luftfeuchtigkeit erhöht sich. Da derartige Sensoren an einer Vielzahl von Positionen innerhalb eines Gebäudes angeordnet sind, können die Daten auch dieser Sensoren, die ursächlich für die Regelung der Raumklimatisierung in das Gebäudeautomatisierungssystem eingebunden sind, in eine Personenortung einfließen.

Bei dem erfindungsgemäßen Verfahren werden die Ergebnisse der zumindest zwei für die Personenortung verwendeten Ortungsverfahren gewichtet, und zwar in Abhängigkeit von der Leistungsfähigkeit des jeweiligen Ortungsverfahrens - Trefferwahrscheinlichkeit und Positionserfassungsgenauigkeit. Typischerweise fließt in die Gewichtung auch die Genauigkeit des jeweiligen Ortungsverfahrens aus der Vorgeschichte ein, welche der Datenbank entnommen wird, in der diese abgelegt sind. Demnach wird ein Ortungsverfahren, welches mit einer höheren Wahrscheinlichkeit eine Person detektiert (Trefferwahrscheinlichkeit) und deren Position mit einer höheren Genauigkeit (Positionserfassungsgenauigkeit) erfasst wird, eine höhere Gewichtung erhalten als die Ergebnisse eines Verfahrens, dessen Ergebnisse weniger aussagekräftig oder aussagegenau sind. Die aktuelle Positionsbestimmung unter Auswertung der Ergebnisse der einzelnen verwendeten Ortungsverfahren erfolgt somit unter Berücksichtigung der gewichteten Ergebnisse. In diese Auswertung gehen aufgrund der Gewichtung der Ergebnisse diejenigen Ortungsverfahren, die eine höhere Trefferwahrscheinlichkeit und Positionserfassungsgenauigkeit haben, mit einer höheren Gewichtung ein als die anderen Verfahren. Die Auswertung der Ergebnisse mehrerer Ortungsverfahren kann zum einen einer Plausibilitätsüberprüfung dienen, ebenso wie eine Ergänzung der einzelnen ermittelten Ergebnisse.

Ist die Position einer Person auf diese Weise ermittelt, wird systemseitig überpüft, ob diese Position einschließlich eines die ermittelte Position umgebenden Flächenbereiches als aktorauslösende Position definiert ist. Um dieses vornehmen zu können, sind zuvor systemseitig diejenigen Positionen definiert worden, an denen, wenn eine Person sich an dieser Position befindet, ein Aktor durch das Gebäudeautomatisierungssystem angesteuert werden soll. Systemseitig wird zu diesem Zweck typischerweise diese Position als Bereich mit einer gewissen Erstreckung definiert werden. Eine aus den Ergebnissen der Ortungsverfahren ermittelte Position einer Person stimmt dann mit einer systemseitig zuvor definierten aktorauslösenden Position überein, wenn beide Bereiche zumindest teilweise überlappen. In Abhängigkeit von dem Auflösungsvermögen der verwendeten Ortungsverfahren kann vorgesehen sein, dass eine Überschneidung in einem bestimmten Maß festgestellt werden muss, wenn daraus abgeleitet werden soll, dass eine Übereinstimmung der vordefinierten aktorauslösenden Position mit der aktuell ermittelten gegeben ist.

Bei hinreichender Übereinstimmung der ermittelten Position einer Person mit einer als aktorauslösend definierten Position wird durch das Gebäudeautomatisierungssystem der wenigstens eine dieser Position zugeordnete Aktor angesteuert, und zwar mit den für diese Postion vorgesehenen Ansteuerdaten. Bezüglich der Aktoransteuerung kann vorgesehen sein, dass ein und dieselbe Aktorauslösung von unterschiedlichen, als aktorauslösend definierten Positionen heraus mit unterschiedlichen Steuerdaten angesteuert wird. Durchaus möglich ist auch eine Steuerung in Abhängigkeit von der Anzahl der Personen in einem Aktor auslösenden Bereich. So kann beispielsweise im Zusammenhang mit einer Lüftungsansteuerung der gesamte Raum, in der eine Mehrzahl an Personen anwesend sind, als Aktor auslösende Position definiert sein. In anderen Fällen können dieses auch Teilbereiche eines Raumes sein, beispielsweise wenn in einem Raum ein Vorführbereich und ein Zuschauerbereich angeordnet sind. So kann bezüglich des Lichtmanagement vorgesehen sein, wenn eine Person im Vorführbereich detektiert wird, die Beleuchtung auf eine Vorführbeleuchtung in diesem Raum zu bringen.

Von Besonderheit bei diesem Verfahren ist, dass eine Situationsbewertung bezüglich der Trefferwahrscheinlichkeit und der Positionserfassungsgenauigkeit der ermittelten Position der Person durchgeführt wird. Dieses wird in aller Regel parallel zu der Aktoransteuerung vorgenommen. In die Situationsbewertung fließen die aktuellen Ergebnisse der Ortungsverfahren und Referenzdatensätze, entnommen einer Datenbank, in der zu den ermittelten Positionen Referenzdatensätze zeitlich zurückliegender Positionsermittlungen dieser Ortungsverfahren hinterlegt sind, ein. Diese Referenzdatensätze werden vorzugsweise fortgeschrieben. Somit erfolgt durch den Rückgriff auf Referenzdatensätze eine Situationsbewertung mit früheren Erfahrungswerten. Hierbei kann es sich durchaus auch um Werte einer Vorbewertung der Genauigkeit der einzelnen Ortungssysteme aus der Entwicklung derselben heraus handeln. Bestimmte Bewegungs- und Verhaltensmuster, die sich aus der fortlaufenden Aufzeichnung ergeben, können darin erkannt werden und in die Situationsbewertung einfließen, auch ohne das Bekanntsein der Identität der einen oder mehreren Personen, zu denen Ortungsdaten abgelegt sind. Die Situationsbewertung endet mit einem positiven oder negativen Ergebnis. Die Situationsbewertung ist positiv, wenn die ermittelte Position einer Person unter Berücksichtigung von Referenzdatensätzen sowie systembezogener Daten keinen Anlass zu Beanstandungen gibt, mithin die ermittelte Position plausibel erscheint. Insofern kann die Situationsbewertung auch als Plausibilitätskontrolle bezüglich des unter Verwendung der mehreren Ortungsverfahren erzielten Ortungsergebnisses verstanden werden. Eine Situationsbewertung ist negativ, wenn beispielsweise eine systemseitige Störung vorliegt, etwa eine Störung im WLAN-Netz, voraussetzend, dass ein WLAN-nutzendes Ortungsverfahren verwendet wird. Dann können die Ergebnisse dieses Ortungsverfahrens nicht in dem vorgesehenen Maße in die Positionsbestimmung einfließen. Bei dem Beispiel einer Störung im WLAN-Netz bleibend, erhält ein das WLAN-Netz nutzendes Ortungsverfahren aufgrund seiner höheren Trefferwahrscheinlichkeit und Positionserfassungsgenauigkeit eine recht hohe Gewichtung. Im Falle einer Störung des WLAN-Netzes wird zur Kompensation des möglichen Fehlers der Ergebnisse der Gewichtungsfaktor dieses Ortungsverfahrens reduziert. Möglich ist auch, dass in Abhängigkeit von der Situationsbewertung die Ergebnisse eines Ortungsverfahrens in die nachfolgende Auswertung nicht mehr einfließen. Insofern wird bei einem solchen Situationsbewertungsergebnis der Gewichtungsfaktor zumindest eines Ortungsverfahrens adaptiert, um Einflüsse von bei dem beschriebenen Beispiel systembedingten Ungenauigkeiten zu vermeiden. Diese für die Situationsbewertung verwendete Information zu Systemstörungen wird aus dem Gebäudeautomatisierungssystem beziehungsweise der für die Steuerung desselben verwendeten Steuereinheit entnommen.

Gemäß einer Ausgestaltung des Verfahrens ist vorgesehen, dass bei Feststellen von systembedingten Störungen, wie vorstehend anhand einer Störung des WLAN-Netzes beschrieben, die Situationsbewertung vorgenommen wird, bevor die durch die Ortungsverfahren ermittelte Position mit den als aktorauslösend definierten Positionen verglichen werden.

Parallel zur Aktoransteuerung oder dieser kurzzeitig nachgeschaltet, wird unabhängig davon, ob die vorbeschriebene systembezogene Positionsbewertung durchgeführt wird oder nicht, eine umfeldbezogene Siuationsbewertung vorgenommen. In diese kann auch die Reaktion der Person auf die durch das Gebäudeautomatisierungssystem vorgenommene Aktoransteuerung einfließen. Wird eine solche Reaktion sensiert, beispielsweise dadurch, dass unmittelbar oder kurz nach der erfolgten Aktoransteuerung eine manuelle Ansteuerung eines anderen Aktors infolge einer manuellen Betätigung eines Sensors, der außerhalb der ermittelten Position angeordnet ist, erfolgt, erlaubt dieses den Rückschluss, dass systemseitig offenbar nicht der tatsächliche, von der Person gewünschte oder benötigte Aktor angesteuert worden ist. Die von der Person vorgenommene Ansteuerung eines anderen Aktors kann somit als Korrekturansteuerung verstanden werden. Grund für die dann vorgenommene Fehlansteuerung kann eine fehlerhafte Positionsermittlung der Person sein. Dieses kann korrigiert werden, und zwar dadurch, dass der Gewichtungsfaktor der Ergebnisse wenigstens eines Ortungsverfahrens adaptiert wird, sodass infolge der Gewichtungsfaktoradaption eine Neuauswertung der ermittelten Ortungsverfahrensergebnisse zu einer Positionsbestimmung führen, die derjenigen aktorauslösenden Position entspricht, an der der personenseitig ausgelöste Aktor angesteuert werden würde. Ergänzend oder auch alternativ kann eine Korrektur dahingehend erfolgen, dass die Aktor auslösende Position angepasst wird. Eine Korrekturansteuerung durch die Person kann auch als Wunsch der Person verstanden werden, dass neben dem systemseitig angesteuerten Aktor ein oder mehrere weitere Aktoren angesteuert werden sollen. Wird eine solche Korrekturansteuerung mehrfach bei ein und derselben aktorauslösenden Position festgestellt, können diese weiteren Aktoren der aktorauslösenden Position zugeordnet werden, sodass nachfolgend bei Feststellen einer auf dieser Position befindlichen Person die Anzahl der dieser aktorauslösenden Position zugeordneten Aktoren angesteuert wird. Die vorstehenden Ausführungen machen deutlich, dass das Verfahren selbstlernend ausgeführt ist. Dieses setzt voraus, dass die ermittelten Positionen und die Ergebnisse der umfeldbezogenen Situationsbewertung in einer Datenbank abgelegt werden, damit diese bei nachfolgenden Situationsbewertungen als Referenzdatensätze genutzt werden können.

Es wird angenommen, dass im Rahmen dieser Ausführungen zum ersten Mal eine Gewichtungsfaktoradaption im Zusammenhang mit einer Personenortung im Innenraum infolge einer Situationsbewertung, wie vorstehend skizziert, beschrieben ist. Dieses erlaubt in besonderem Maße auch den Einsatz ansonsten als eher unpräzise bezüglich ihrer Ergebnisse angesehener Ortungsverfahren für eine Positionsbestimmung einer Person einzusetzen. Wird die Bewegung einer Person nachverfolgt, kann die aktuell ermittelte Position der Person hinsichtlich der Positionsgenauigkeit immer dann korrigiert bzw. hinsichtlich des Konfidenzintervalls der ermittelten Position eingeschränkt werden, wenn eine Positionserfassung mit besonders hoher Positionserfassungsgenauigkeit vorgenommen worden ist, beispielsweise wenn die Person manuell einen Sensor bedient oder eine Zutrittskontrolle durchschreitet. Dann ist der Bereich, in dem die Person zugegen sein muss, eng begrenzt.

Bei diesem Verfahren ist vorzugsweise eines der beiden Ortungsverfahren ein aktives Ortungsverfahren durch Nutzen elektromagnetischer Wellen oder von Schallwellen und das wenigstens eine weitere Ortungsverfahren ein inaktives Ortungsverfahren durch Nutzen der Daten von in das Gebäudeautomatisierungssystem typischerweise ohnehin eingebundener Sensoren. Selbstverständlich können zur Verbesserung der Ergebnisqualität in der Personenpositionierung in ein vorhandenes Gebäudeautomatisierungssystem zusätzlich, diesem Zweck dienende Sensoren eingesetzt werden.

Nachfolgend ist die Erfindung anhand eines Ausführungsbeispiels unter Bezugnahme auf die beigefügten Figuren beschrieben. Es zeigen:
- **Fig. 1:**: zeigt ein schematisiertes Flussdiagramm zu dem erfindungsgemäßen Verfahren zum personenpositionsabhängigen Ansteuern von in ein Gebäudeautomatisierungssystem eingebundenen Aktoren und
- **Fig. 2:**: eine schematisierte Situationsskizze.

Im Rahmen des erfindungsgemäßen und unter Bezugnahme auf die Figuren beschriebenen Verfahrens werden die Ergebnisse von mehreren Ortungsverfahren für die personenbezogene Positionsbestimmung ausgewertet. Bei dem in der Figur beschrieben Ausführungsbeispiel handelt es sich bei dem Ortungsverfahren um ein direktes Ortungsverfahren. Bei diesem Ortungsverfahren wird der Umstand genutzt, dass die bezüglich ihrer Position innerhalb der Reichweite des Gebäudeautomatisierungssystems zu überwachende Person ein Smartphone mitführt. Teil des Gebäudeautomatisierungssystems ist ein WLAN-Netzwerk, in das sich das als Sende-Empfangseinrichtung dienende Smartphone eingewählt hat. Innerhalb des Gebäudeinstallationssystems sind mehrere WLAN-Knoten, die räumlich voneinander getrennt sind, eingebunden. Ausgewertet wird von den mehreren WLAN-Knoten der Empfang des Signals von dem von der bezüglich ihrer Position zu überwachenden Person mitgeführten Smartphone. Über die von jedem WLAN-Knoten empfangene Signalstärke kann mit an sich bekannten Verfahren die Position des Smartphones recht genau ermittelt werden.

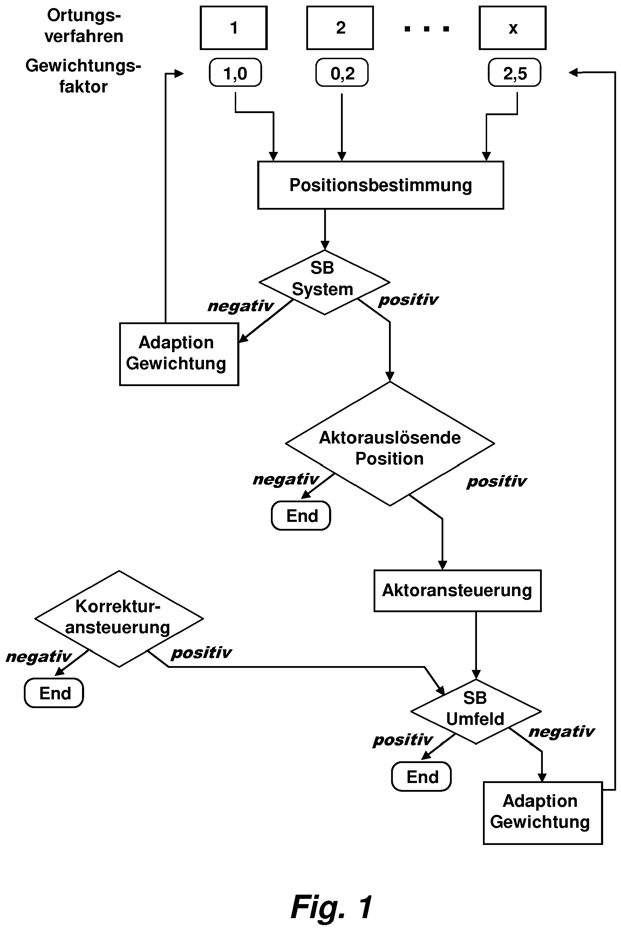

Bei dem unter Verweis auf Figur 1 beispielhaft beschriebenen Verfahren wird als Ortungsverfahren 2 das vorhandene Funkfeld des WLAN-Netzwerkes im Hinblick auf Feldstörungen überwacht. Störungen in dem Funkfeld entstehen, wenn sich in dem Funkfeld befindlichen Gegenstände oder Personen bezüglich ihrer Position ändern. Über die Art der Störung im Funkfeld kann die Position der Person ermittelt werden. Bei dem beschriebenen Ausführungsbeispiel werden weitere Ortungsverfahren für die Positionsbestimmung einer Person genutzt. Von diesen mehreren weiteren Ortungsverfahren ist in der Figur als weiteres Ortungsverfahren das Ortungsverfahren x dargestellt. Bei diesem Ortungsverfahren x werden manuelle Sensorbetätigungen der Person für die Positionsbestimmung genutzt. Bei diesem Verfahren macht man sich den Umstand zunutze, dass bei einer manuellen Betätigung eines Sensors die Person in unmittelbarer Nähe des bedienten Sensors ist. Mit diesem Ortungsverfahren sind die Trefferwahrscheinlichkeit und die Positionserfassungsgenauigkeit sehr hoch; d.h.: Die Wahrscheinlichkeit, dass bei Detektion eines solchen Signals sich tatsächlich eine Person in unmittelbarer Nähe zu dem manuell betätigten Sensor befindet, ist sehr hoch. Zudem ist die Positionserfassungsgenauigkeit sehr hoch, da die den Sensor betätigende Person maximal eine Armlänge von dem Sensor entfernt sein kann, typischerweise jedoch in sehr viel größerer Nähe zu dem Sensor sich befindet. In die Personenpositionsbestimmung gehen auch die Ergebnisse weiterer Ortungsverfahren ein, beispielsweise die Signale derjenigen Sensoren, die gebäudeautomatisierungssystemseitig ohnehin erfasst und ausgewertet werden. Hierbei handelt es sich um die Daten von Temperatursensoren, Gasgehaltssensoren, Feuchtigkeitssensoren sowie Signale von Bewegungsmeldern und dergleichen.

Die für die Personenpositionsbestimmung einer Person verwendeten Ortungsverfahren bzw. deren Ergebnisse werden gewichtet. Dieses erfolgt in Bezug auf die Trefferwahrscheinlichkeit und die Genauigkeit der Positionserfassung. Bei dem beschriebenen Ausführungsbeispiel ist dem Ortungsverfahren 1 der Gewichtungsfaktor 1,0, dem Ortungsverfahren 2 der Gewichtungsfaktor 0,2 und dem Ortungsverfahren x der Gewichtungsfaktor 2,5 zugeteilt. Die Ergebnisse der einzelnen Ortungsverfahren gehen mit dem jeweiligen Gewichtungsfaktor gewichtet in die Positionsbestimmung ein. Unter Berücksichtigung der Ergebnisse der verwendeten Ortungsverfahren wird sodann die aktuelle Position der Person ermittelt.

Bei dem dargestellten Ausführungsbeispiel schließt sich an die Positionsbestimmung eine erste Situationsbewertung an. Über diese erfolgt eine Plausibilitätsprüfung in Bezug auf unter Umständen vorhandene systembezogene Störungen oder Fehler. Wird über das Gebäudeautomatisierungssystem beispielsweise eine Störung im WLAN-Netzwerk festgestellt, wird die Positionsbestimmung anhand der ermittelten Ergebnisse der Ortungsverfahren mit einer an die Störung adaptierten Gewichtung der Ortungsverfahren wiederholt. Bei einer Störung im WLAN-Netzwerk wird die Gewichtung bezüglich der Ortungsverfahren 1 und/oder 2 in Abhängigkeit von der detektierten Störung herabgesetzt. Mithin gehen die Ergebnisse des bezüglich seines Gewichtungsfaktors reduzierten Ortungsverfahrens in die Positionsbestimmung mit entsprechend geringerer Gewichtung ein. Dabei kann vorgesehen sein, dass die Ergebnisse eines Ortungsverfahrens von der Positionsbestimmung ausgeschlossen werden, wenn dieses durch die detektierte Störung angezeigt ist.

Ist die Situationsbewertung positiv, wird in einem nachfolgenden Schritt untersucht, ob die ermittelte Position mit einer systemseitig als aktorauslösend definierten Position übereinstimmt. Die aktorauslösenden Positionen sind in einer Datenbank gespeichert. Die aus den Ortungsverfahren ermittelte Position der Person wird nicht als Punktkoordinate in die Vergleichsoperation eingebracht, sondern mit einem einen gewissen Flächenbereich beschreibenden Datensatz. Hierbei kann es sich um eine vorgegebene Abweichung um eine Punktkoordinate herum handeln. Durchaus möglich ist es auch, dass der Flächenbereich keine regelmäßige Umrisskontur aufweist. In derselben Art und Weise sind die aktorauslösenden Positionsdaten in der Datenbank abgelegt. Bezüglich dieser Daten kann der Flächenbereich hinsichtlich des Abstandes des Umrisses von seinem Mittelpunkt, wenn gewünscht, eingerichtet werden. Typischerweise wird ein solcher Positionsflächenbereich systemseitig vorgegeben sein. Situationsbedingt kann es sich jedoch anbieten, die aktorauslösende Position durch einen kleineren oder auch einen größeren Flächenbereich zu definieren. Eine Bewertung der Übereinstimmung der ermittelten Position bzw. des ermittelten Positionsbereiches mit dem aktorauslösenden Positionsbereich erfolgt anhand des Grades der Überschneidung der Flächenbereiche. Typischerweise ist dieses systemseitig vorgegeben bzw. kann eingerichtet werden. Allerdings besteht die Möglichkeit, Einfluss auf diese Bewertung zu nehmen. Einfluss genommen werden kann auf diese Bewertung etwa in Abhängigkeit von den verwendeten Ortungsverfahren, die grundsätzlich für dieses Verfahren verwendet werden und auch deren Ergebnisse, die aktuell für die Positionsermittlung genutzt worden sind. Im Falle einer festgestellten Störung in einem Ortungsverfahren könnte es sinnvoll sein, einen höheren Überschneidungsgrad zwischen der aktuell ermittelten Position und der systemseitig hinterlegten zu fordern, um nachfolgend von einer Übereinstimmung der beiden Positionsdatensätze auszugehen. In einem anderen Fall kann auch ein geringerer Überschneidungsgrad gefordert werden, um von einer Übereinstimmung ausgehen zu können.

Eine hinreichende Übereinstimmung der ermittelten Positionsbestimmung mit einer aktorauslösenden Position kann über den Grad der Flächenüberdeckung erfolgen. Der Grad der Flächenüberdeckung ist bei der Einrichtung des Systems definiert worden. Möglich ist es auch, in ein solchen Vergleich die jeweiligen Zentren der Positionsflächenbereiche mit einzubeziehen und auf eine hinreichende Übereinstimmung beispielsweise dann zu schließen, wenn die Positionsflächenzentren beide im Überlappungsbereich angeordnet sind.

Wird eine Übereinstimmung zwischen der durch die Ortungsverfahren ermittelten aktuellen Position der Person mit einer systemseitig hinterlegten aktorauslösenden Position nicht festgestellt, wird das Verfahren beendet.

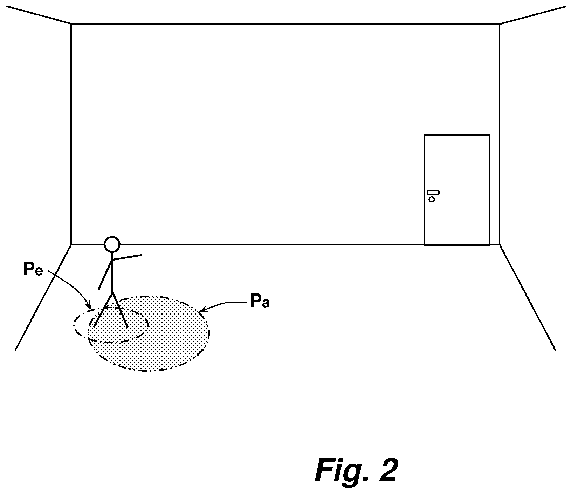

Liegt eine hinreichende Übereinstimmung zwischen der aus den Ortungsverfahren ermittelten Position und einer systemseitig als aktorauslösend definierte Position vor, wird der zumindest eine der Position zugeordnete Aktor mit den für die ermittelte Position vorgesehenen Steuerdaten angesteuert. Eine solche Situation ist in Figur 2 skizziert. Die ermittelte Position Pₑ befindet sich in einer hinreichenden Übereinstimmung mit der Aktor auslösenden Position Pₐ. Hierbei kann es sich letztendlich um jedes in das Gebäudeautomatisierungssystem eingebundene Gewerk, wie Licht, Heizung und/oder Beschattung handeln. Bei dem beschriebenen Ausführungsbeispiel wird die Raumbeleuchtung eingeschaltet. Handelt es sich bei dem Raum um einen Flur, braucht im Unterschied zu der Beleuchtungsansteuerung mit einem Bewegungsmelder keine Nachlaufzeit eingestellt zu werden. Vielmehr braucht bei diesem Verfahren die Flurbeleuchtung nur solange angeschaltet zu bleiben, bis die Person nach Verlassen der aktorauslösenden Position entweder diese erneut durchquert oder eine andere aktorauslösende Position erreicht. Dann wird die Beleuchtung ausgeschaltet. Dieses erfolgt also zu einem Zeitpunkt, wenn die Person tatsächlich nicht mehr in dem Raum (Flur) ist und nicht erst nach Ablauf der Nachlaufzeit. Sollte sich die Person in dem Flur länger aufhalten, würde die Beleuchtung entsprechend länger eingeschaltet bleiben, ohne dass nach Ablauf der Nachlaufzeit durch die Person die Beleuchtung erneut eingeschaltet werden müsste.

Parallel zu der Aktoransteuerung wird bei dem dargestellten Ausführungsbeispiel eine weitere Situationsbewertung durchgeführt, und zwar in Bezug auf das Umfeld der Aktorauslösung. Im Zusammenhang mit dieser Situationsbewertung werden Aktoransteuerbefehle, vor allem manuelle Gerätebetätigungen ausgewertet, die als Folge (Reaktion) der zuvor über das Gebäudeautomatisierungssystem bewirkten Aktoransteuerung verstanden werden können. Derartige manuell ausgelöste Aktoransteuerungen betreffen Aktoren, die in der Nachbarschaft oder zumindest in der Nähe des angesteuerten Aktors, also beispielsweise der zuvor angesteuerten Beleuchtungseinrichtung sind. Ist beispielsweise aufgrund der Positionsbestimmung in einem Raum eine Stehleuchte angesteuert worden, wird jedoch in Folge eine ebenfalls in dem Raum stehende Schreibtischleuchte eingeschaltet, lässt dieses darauf schließen, dass die Positionsermittlung fehlerhaft war, da sich die Person aufgrund der von ihr vorgenommenen Korrektoransteuerung offenbar neben dem Schreibtisch befunden hat, wo ebenfalls eine aktorauslösende Position definiert ist. In einem solchen Fall ist die Situationsbewertung des Umfeldes negativ. Dieses führt zu einer Adaption der Gewichtungsfaktoren der Ortungsverfahren, um die ermittelte Position auf diese Weise zu korrigieren und auf die tatsächlich für diesen Aktor zugeordnete aktorauslösende Position zu bringen. In einem solchen Fall wird der Ort des Wirkens für die Korrektur systemseitig in einer Datenbank gespeichert und nicht die aktuell ermittelte Position des Nutzers. Es versteht sich, dass eine solche Korrekturmaßnahme der Adaption des Gewichtungsfaktors eines oder mehrerer Ortungsverfahren auch erst dann durchgeführt werden kann, wenn dieselbe Korrekturansteuerung mehrfach, also: zumindest zweimal detektiert worden ist.

Die Situationsbewertung endet positiv, wenn kein Korrekturbedarf der Gewichtungsfaktoren besteht.

Die ermittelten Positionsdaten werden zeitkodiert in einer Datenbank abgelegt. Aus diesen Daten lassen sich Bewegungsprofile ableiten. Diese können, wenn gewünscht, einer Person zugeordnet werden.

In die Situationsbewertung "Umfeld" fließen typischerweise auch zurückliegende Daten als Referenzdaten ein, um beispielsweise eine aktuelle festgestellte Korrekturansteuerung als solche bewerten zu können.

Anhand festgestellter Bewegungsprofile ist mithilfe dieses Verfahrens das Gebäudeautomatisierungssystem selbstlernend und kann nach einer Einlernphase vorausschauend diejenigen Aktoren ansteuern, die dem Bewegungsprofil entsprechend personenseitig mit hoher Wahrscheinlichkeit angesteuert werden sollen.

Die Verwendung mehrerer unterschiedlicher Ortungsverfahren erlaubt auch die Nachverfolgung und Positionsbestimmung von Personen, die ihr Smartphone als Sende-Empfangseinrichtung als notwendiges Hilfsmittel für eines der Ortungsverfahren abgelegt haben und sich in dem Gebäude ohne dieses weiterbewegen. Systemseitig wird dieses dadurch festgestellt, dass die Ergebnisse des das Smartphone als Sende-Empfangseinrichtung nutzenden Ortungsverfahrens (WLAN) mit denjenigen der anderen Ortungsverfahren auseinandergehen bzw. dadurch, dass das Ergebnis der durch das WLAN-Ortungsverfahren ermittelten Position sich nicht ändert, die von dem oder den anderen Ortungsverfahren ermittelten Positionen sich jedoch ändern. Im Rahmen der Situationsbewertung "System" kann dieses Auseinanderdriften der Ergebnisse bewertet werden, was sodann zu einer Adaption des oder der Gewichtungsfaktoren führt, wobei im vorliegenden Fall die Ergebnisse der Positionsbestimmung des WLAN-Ortungsverfahrens zwar regelmäßig miterfasst werden, jedoch in die nachfolgende Auswertung nicht mehr eingehen, zumindest solange nicht, solange das Smartphone nicht bewegt worden ist.

Einsetzen lässt sich dieses Verfahren sowohl im privaten Bereich als auch in Firmengebäuden oder öffentlichen Gebäuden. Vorteilhaft ist vor allem, dass durch die Mehrzahl an durchgeführten Ortungsverfahren die durch ein solches Gebäudeautomatisierungssystem in aller Regel ohnehin zur Verfügung stehenden Daten zum Zwecke dieses Verfahrens genutzt werden können.

Die Erfindung ist anhand von Ausführungsbeispielen beschrieben. Ohne den Umfang der geltenden Ansprüche zu verlassen, ergeben sich für einen Fachmann zahlreiche Möglichkeiten, die Erfindung umzusetzen, auch ohne dass dieses im Rahmen dieser Ausführungen im Einzelnen erläutert werden müsste.

## Patentansprüche

1. Verfahren zum personenpositionsabhängigen Ansteuern wenigstens eines in ein Gebäudeautomatisierungssystem eingebundenen Aktors, bei welchem Verfahren für die personenbezogene Positionsbestimmung die Ergebnisse von zumindest zwei unterschiedlichen Ortungsverfahren verwendet werden und welches Verfahren mit folgenden Schritten durchgeführt wird:
- Gewichten der Ortungsergebnisse jedes Ortungsverfahrens in Abhängigkeit von seiner personenbezogenen Trefferwahrscheinlichkeit und Positionserfassungsgenauigkeit,
- Ermitteln der aktuellen Position der Person auf Grundlage der gewichteten Ergebnisse der Ortungsverfahren,
- Vergleichen der ermittelten Position (Pₑ) mit in einer Datenbank hinterlegten, als Aktor auslösend definierten Positionen (Pₐ),
- bei hinreichender Übereinstimmung der ermittelten Position (Pₑ) mit einer als Aktor auslösend definierten Position (Pₐ) Ansteuern des wenigstens einen der Position zugeordneten Aktors mit den für diese Position vorgesehenen Steuerdaten über das Gebäudeautomatisierungssystem und
- Durchführen einer Situationsbewertung bezüglich der Trefferwahrscheinlichkeit und der Erfassungsgenauigkeit der ermittelten Position (Pₑ) der Person, wobei in die Situationsbewertung die aktuellen Ergebnisse der Ortungsverfahren, in einer Datenbank hinterlegte, der ermittelten Position (Pₑ) entsprechende Referenzdatensätze dieser Ortungsverfahren und eine, wenn vorliegend, personenseitig als Reaktion auf die Aktoransteuerung vorgenommene Korrekturansteuerung einfließen und wobei bei negativer Situationsbewertung eine Adaption des Gewichtungsfaktors zumindest eines der Ortungsverfahren zum Korrigieren der ermittelten Position (Pₑ) vorgenommen wird,
wobei eine negative Situationsbewertung systembedingt oder durch eine Korrekturansteuerung hervorgerufen wird und wobei eine personenseitige Korrekturansteuerung eines anderen Aktors, als durch das Gebäudeautomatisierungssystem angesteuert, zu einer negativen Situationsbewertung führt und dann der oder die Gewichtungsfaktoren der Ortungsverfahren, deren Ergebnisse für die Positionsbestimmung verwendet worden sind, adaptiert werden, um auf diese Weise die ermittelte Position (Pₑ) der Person an diejenige anzupassen, die der vordefinierten aktorauslösenden Position (Pₐ) entspricht, die dem von der Person im Zuge der Korrekturansteuerung betätigten Aktor entspricht.

2. Verfahren nach Anspruch 1, **dadurch gekennzeichnet, dass** eine systemseitige Störung in einem der Ortungsverfahren zu einer negativen Situationsbewertung und zu einer Reduzierung des Gewichtungsfaktors bezüglich dieses Ortungsverfahrens führt.

3. Verfahren nach einem der Ansprüche 1 bis 2, **dadurch gekennzeichnet, dass** die ermittelten Positionen (Pₑ) zum Erstellen von Bewegungsprofilen zeitkodiert in einer Datenbank abgelegt werden.

4. Verfahren nach einem der Ansprüche 1 bis 3, **dadurch gekennzeichnet, dass** von den zumindest zwei Ortungsverfahren eines ein aktives Ortungsverfahren durch Nutzen von elektromagnetischen Wellen oder von Schallwellen und das wenigstens eine weitere Ortungsverfahren ein inaktives Ortungsverfahren durch Nutzen von in das Gebäudeautomatisierungssystem eingebundenen Sensoren ist.

5. Verfahren nach Anspruch 4, **dadurch gekennzeichnet, dass** das inaktive Ortungsverfahren als direkt positionserfassendes Ortungsverfahren ausgelegt ist, durch das die aktuelle Position der Person anhand einer von ihr berührend vorgenommenen Sensor- oder Aktorbetätigung des Gebäudeautomatisierungssystems bestimmt wird.

6. Verfahren nach Anspruch 4 oder 5, **dadurch gekennzeichnet, dass** das inaktive Ortungsverfahren als indirekt positionserfassendes Ortungsverfahren ausgelegt ist, durch das die aktuelle Position der Person anhand von Daten berührungslos arbeitender Sensoren des Gebäudeautomatisierungssystems bestimmt wird.

7. Verfahren nach Anspruch 6, **dadurch gekennzeichnet, dass** für die indirekt positionserfassende Ortung einer Person die Sensordaten von Bewegungsmeldern, Zutrittskontrolleinrichtungen, Temperatur-, Feuchte- und/oder Gassensoren verwendet werden.

8. Verfahren nach einem der Ansprüche 4 bis 7, **dadurch gekennzeichnet, dass** das aktive Ortungsverfahren durch Verfolgen einer der Person zugehörigen Sende-Empfangseinrichtung vorgenommen wird.

9. Verfahren nach einem der Ansprüche 4 bis 7, **dadurch gekennzeichnet, dass** das aktive Ortungsverfahren als indirektes Ortungsverfahren durch Auswerten von durch die Person in einem elektromagnetischen Feld induzierte Störungen durchgeführt wird.

10. Verfahren nach einem der Ansprüche 4 bis 9, **dadurch gekennzeichnet, dass** ein aktives Ortungsverfahren und mehrere inaktive Ortungsverfahren für die Positionsbestimmung einer Person eingesetzt werden.

## Claims

1. Process of controlling at least one actuator integrated in a building automation system depending on the position of a person, in which process the results of at least two different locating methods are used for the person-related position determination, and which process comprises the following steps:
- Weighting the locating results of each locating method according to its person-related hit probability and position detection accuracy,
- Determining the current position of the person based on the weighted results of the locating methods,
- Comparing the determined position (Pₑ) with positions (Pₐ) defined as actuator-triggering and stored in a database,
- if the determined position (Pₑ) corresponds sufficiently to a position (Pₐ) defined as actuator-triggering, activation of the at least one actuator assigned to the position with the control data provided for this position via the building automation system and
- carrying out a situation evaluation with regard to the hit probability and the detection accuracy of the determined position (Pₑ) of the person, wherein the current results of the locating methods, reference data records of these locating methods which are stored in a database and correspond to the determined position (Pₑ) and, if any, a correction control carried out by the person as a reaction to the actuator activation are included in the situation evaluation, and wherein the weighting factor of at least one of the locating methods is adapted to correct the determined position (Pₑ) if the situation evaluation is negative, wherein a negative situation evaluation is caused by the system or by a correction control, and wherein a person-side correction control of an actuator other than that controlled by the building automation system leads to a negative situation evaluation, and then the weighting factor or factors of the locating methods, whose results have been used to determine the position, are adapted so as to adapt the determined position (Pₑ) of the person to that corresponding to the predefined actuator-triggering position (Pₐ) corresponding to the actuator activated by the person in the course of the correction control.

2. Process in accordance with Claim 1, **characterized by the fact** that a systemic disruption in one of the locating methods leads to a negative situation evaluation and to a reduction of the weighting factor with regard to this locating method.

3. Process in accordance with any of Claims 1 to 2, **characterized by the fact** that the determined positions (Pₑ) are stored with time codes in a database to create motion profiles.

4. Process in accordance with any of Claims 1 to 3, **characterized by the fact** that one of the at least two locating methods is an active locating method by using electromagnetic waves or sound waves and the at least one further locating method is an inactive locating method using sensors integrated in the building automation system.

5. Process in accordance with Claim 4, **characterized by the fact** that the inactive locating method is designed as locating method sensing the position directly, by which method the current position of the person is determined by this person touching a sensor or actuator in the building automation system.

6. Process in accordance with Claim 4 or 5, **characterized by the fact** that the inactive locating method is designed as an indirect position-detecting locating method by which the current position of the person is determined on the basis of data from contactless sensors of the building automation system.

7. Process in accordance with Claim 6, **characterized by the fact** that for the indirect position-detecting localization of a person, the sensor data of motion detectors, access control devices, temperature, humidity and/or gas sensors are used.

8. Process in accordance with any of Claims 4 to 7, **characterized by the fact** that the active locating method is carried out by tracking a transceiver associated with the person.

9. Process in accordance with any of Claims 4 to 7, **characterized by the fact** that the active locating method is carried out as an indirect locating method by evaluating disturbances induced by the person in an electromagnetic field.

10. Process in accordance with any of Claims 4 to 9, **characterized by the fact** that one active locating method and several inactive locating methods are used to locate a person.

## Revendications

1. Procédé de commande d'au moins un actionneur intégré dans un système d'automatisation de bâtiment en fonction de la position d'une personne, procédé dans lequel les résultats d'au moins deux méthodes de localisation différentes sont utilisés pour la détermination de la position de la personne, et lequel procédé est exécuté avec les étapes suivantes:
- Pondérer les résultats de localisation de chaque méthode de localisation en fonction de sa probabilité de succès relative à la personne et de sa précision de détection de position,
- Déterminer la position actuelle de la personne en fonction des résultats pondérés des méthodes de localisation,
- Comparer la position déterminée (Pₑ) avec les positions (Pₐ) définies comme celles activant l'actionneur et enregistrées dans une base de données,
- Si la position déterminée (Pₑ) correspond suffisamment à une position (Pₐ) définie comme celle activant l'actionneur, activer l'au moins un actionneur affecté à la position avec les données de commande prévues pour cette position via le système d'automatisation de bâtiment et
- Effectuer une évaluation de la situation en tenant compte de la probabilité de succès et de la précision de détection de la position déterminée (Pₑ) de la personne, y étant intégrés les résultats actuels des méthodes de localisation, des enregistrements de données de référence de ces méthodes de localisation qui sont enregistrés dans une base de données et correspondent à la position déterminée (Pₑ) et, si elle existe, une commande de correction effectuée côté personne en fonction de l'activation de l'actionneur, et le facteur de pondération d'au moins une des méthodes de localisation pour corriger la position déterminée (Pₑ) étant adapté dans le cas d'une évaluation négative de situation,
une évaluation de situation négative étant provoquée par le système ou par une commande de correction, et une commande de correction côté personne d'un actionneur autre que celui commandé par le système d'automatisation de bâtiment menant à une évaluation negative de la situation, et ensuite le ou les facteurs de pondération des méthodes de localisation, dont les résultats ont été utilisés pour déterminer la position, sont adaptés de manière à adapter la position déterminée (Pₑ) de la personne à celle correspondant à la position prédéfinie de déclenchement de l'actionneur (Pₐ) correspondant à l'actionneur actionné par la personne lors de la commande de correction.

2. Procédé selon la revendication 1, **caractérisé en ce qu'**une perturbation systémique de l'une des méthodes de localisation entraîne une évaluation négative de la situation et une réduction du facteur de pondération pour cette méthode de localisation.

3. Procédé selon l'une des revendications 1 à 2, **caractérisé en ce que** les positions déterminées (Pₑ) sont codées dans le temps et stockées dans une base de données pour créer des profils de mouvement.

4. Procédé selon l'une des revendications 1 à 3, **caractérisé en ce que** l'une des au moins deux méthodes de localisation est une méthode de localisation active en utilisant des ondes électromagnétiques ou des ondes sonores et l'au moins une autre méthode de localisation est une méthode de localisation inactive en utilisant des capteurs intégrés dans le système d'automatisation de bâtiment.

5. Procédé selon la revendication 4, **caractérisé en ce que** la méthode de localisation inactive est conçue comme méthode de localisation par détection directe de position par laquelle la position actuelle de la personne est déterminée **en ce que** la personne touche un capteur ou un actionneur du système d'automatisation de bâtiment.

6. Procédé selon la revendication 4 ou 5, **caractérisé en ce que** la méthode de localisation inactive est conçue comme méthode de localisation par détection indirecte de position par laquelle la position actuelle de la personne est déterminée sur la base de données provenant de capteurs sans contact du système d'automatisation de bâtiment.

7. Procédé selon la revendication 6, **caractérisé en ce que** pour la détection indirecte de la position d'une personne, on utilise les données des détecteurs de mouvement, des dispositifs de contrôle d'accès, des capteurs de température, d'humidité et/ou de gaz.

8. Procédé selon l'une des revendications 4 à 7, **caractérisé en ce que** la méthode de localisation active est effectuée en suivant un émetteur-récepteur associé à la personne.

9. Procédé selon l'une des revendications 4 à 7, **caractérisé en ce que** la méthode de localisation active est exécutée en tant que méthode de localisation indirecte en évaluant les perturbations induites par la personne dans un champ électromagnétique.

10. Procédé selon l'une des revendications 4 à 9, **caractérisé en ce qu'**une méthode de localisation active et plusieures méthodes de localisation inactives sont utilisées pour localiser une personne.
